# EUROPÄISCHE PATENTSCHRIFT

(11) **EP 1 745 851 B1**
(45) Veröffentlichungstag und Bekanntmachung des Hinweises auf die Patenterteilung: **25.02.2015**
(21) Anmeldenummer: 06116504.9
(22) Anmeldetag: 03.07.2006
(51) Int. Cl.: G01N 1/14, B01L 3/02, G01N 35/10

(54) **Verfahren, Vorrichtung und Computerprogrammprodukt zum Klassifizieren einer Flüssigkeit**
PROCESS, DEVICE AND COMPUTERPROGRAMM PRODUCT FOR THE CLASSIFICATION OF A LIQUID
PROCEDE, DISPOSITIF ET PROGRAMME POUR LA CLASSIFICATION DES LIQUIDES

(30) Priorität: 22.07.2005 CH 12232005
(43) Veröffentlichungstag der Anmeldung: 24.01.2007
(73) Patentinhaber: Tecan Trading AG, 8708 Männedorf (CH)
(72) Erfinder: Ingenhoven, Nikolaus, Dr., 8713 Uerikon (CH); Liebhard, Robert, Dr., 8050 Zürich (CH); Zuppiger, Adi, 8854 Siebnen (CH); Hälg, Werner, Dr., 8708 Männedorf (CH)
(74) Vertreter: OK pat AG

(56) Entgegenhaltungen:
- EP-A- 0 608 425
- EP-A- 1 447 669
- US-A- 4 794 085
- US-A- 5 723 795

## Beschreibung

Die Erfindung betrifft gemäss dem Oberbegriff des unabhängigen Anspruchs 1 ein Verfahren zum Auswählen von Pipettierparametern für eine Flüssigkeit, bei dem ein Fluidraum mit einem Messraum in Verbindung steht und der Innendruck dieses Messraums mit einem Druckfühler überwacht wird, und bei dem zumindest ein erster Teil dieses Fluidraums mit einer Probe dieser Flüssigkeit in Fluidverbindung gebracht wird. Besonders bevorzugte Ausführungsformen des erfindungsgemässen Verfahrens beziehen sich auf ein Pipetiergerät zum Liquid Handling von Flüssigkeitsproben.

Die Erfindung umfasst somit ein Verfahren zum Auswählen von Pipettierparametern für Flüssigkeiten in einem Pipetiergerät zur Aufnahme (Aspiration) und zur Abgabe (Dispens) von Flüssigkeitsvolumina wie z.B. Proben von menschlichen Körperflüssigkeiten. Ein solches Pipetiergerät umfasst eine Pipettenspitze, die an einer Pumpe angeschlossen ist.

Industriezweige, die sich z.B. in der pharmazeutischen Forschung bzw. in der klinischen Diagnostik mit biochemischen Techniken befassen, benötigen Anlagen zum Verarbeiten von Flüssigkeitsvolumina und Flüssigkeitsproben. Automatisierte Anlagen umfassen üblicherweise ein einzelnes Pipetiergerät oder mehrere Pipetiergeräte, welche an Flüssigkeitsbehältern eingesetzt werden, die sich auf dem Arbeitstisch einer Arbeitsstation befinden. Solche Arbeitsstationen sind oftmals fähig, unterschiedlichste Arbeiten an diesen Flüssigkeitsproben auszuführen, wie z.B. optische Messungen, Pipettieren, Waschen, Zentrifugieren, Inkubieren und Filtrieren. Ein oder mehrere Roboter, operieren diese nun nach kartesischen oder polaren Koordinaten, können zur Probenbearbeitung an einer solchen Arbeitsstation eingesetzt werden. Solche Roboter können Flüssigkeitsbehälter, wie. z.B. Probenröhrchen oder Mikroplatten tragen und umplatzieren. Solche Roboter können auch als sogenannte "robotic sample processor" (RSP), wie z.B. als Pipetiergerät zum Aspirieren und Dispensieren, oder als Dispenser zum Verteilen von Flüssigkeitsproben eingesetzt werden. Vorzugsweise werden solche Anlagen durch einen Rechner kontrolliert und gesteuert. Ein entscheidender Vorteil solcher Anlagen besteht darin, dass grosse Zahlen von Flüssigkeitsproben über lange Zeiträume von Stunden und Tagen automatisch bearbeitet werden können, ohne dass ein menschlicher Operator in den Bearbeitungsprozess eingreifen muss.

Aus dem Stand der Technik (vgl. z.B. US 4,675,301, US 4,794,085 und US 5,723,795) bekannte Pipetiergeräte umfassen eine Pipettenspitze, die an einer Pumpe angeschlossen ist. Einige dieser Geräte umfassen einen Fluidraum, mit welchem ein Druckfühler mit einem Drucksensor über einen gasgefüllten Raum in Verbindung steht. Dieser Fluidraum ist dabei durch die Pipettenspitze, eine erste Leitung, welche die Pipettenspitze mit einer Pumpe verbindet, und einen aktiven Teil dieser Pumpe definiert.

Beim Pipettieren von Flüssigkeiten tritt oft die Frage nach der Art, d.h. nach den physikalischen Merkmalen oder Konstanten dieser Flüssigkeit auf. Es ist deshalb aus dem Stand der Technik bekannt, dass Flüssigkeiten an Hand ihrer physikalischen Konstanten, wie z.B. Oberflächenspannung, Viskosität oder Dampfdruck klassifiziert werden. An Hand der entsprechenden Klassifikation können dann die geeigneten Pipetierparameter bestimmt und diese Flüssigkeiten mit verbesserter Präzision pipettiert werden.

Aus dem Dokument EP 0 608 425 ist das Messen der Viskosität einer Flüssigkeitsprobe mit einem Pipetiergerät bekannt. Dabei wird von einer Zeitspanne ausgegangen, die benötigt wird, um einen definierten, ursprünglich über eine zum Ansaugen der Flüssigkeit verwendete Pipettenspitze angelegten, Unterdruck auf ein bestimmtes Mass zu verändern. Dieser Zeitwert wird mit bekannten, solchen Zeitwerten gegenübergesetzten Viskositätsdaten in einer Tabelle verglichen und dadurch die aktuelle Viskosität der Flüssigkeit ermittelt. In Anwendung dieses Verfahrens konnte bei zentrifugierten Blutproben die überstehende Fraktion mit den roten Blutzellen von dem Blutplasma getrennt gesammelt werden.

Wie weiter oben erläutert, spielen aber auch andere Parameter beim Pipettieren eine wesentliche Rolle. So ist wegen des unterschiedlichen Dampfdrucks bekannt, dass Proben von Wasser oder Aceton in völlig unterschiedlicher Weise pipettiert werden müssen. Die Oberflächenspannung dieser Lösungsmittel ist ebenfalls sehr unterschiedlich. Zur Illustration sind in der Tabelle 1 die Viskosität, der Dampfdruck und die Oberflächenspannung für einige gebräuchliche Lösungsmittel angegeben.

**Tabelle 1**

| Lösungsmittel (bei 20 °C) | Viskosität [mPas] | Dampfdruck [hPa] | Oberflächenspannung [mN/m] |
|---|---|---|---|
| Wasser | 1.002 | 23 | 72.8 |
| DMSO | 2.14 | 0.56 | 43.0 |
| Aceton | 0.32 | 240 | 23.3 |
| Ethanol | 1.2 | 59 | 22.3 |

Aus dieser Tabelle 1 ist ersichtlich, dass die Oberflächenspannung von Aceton und Ethanol sehr ähnlich ist. Trotzdem sind diese beiden Lösungsmittel wegen den sehr unterschiedlichen Werten ihrer Parameter Viskosität und/oder Dampfdruck beim Pipetieren nicht gleich zu behandeln. Es liegt deshalb auf der Hand, dass es kaum genügt, nur einen Parameter zu bestimmen, um solch unterschiedliche Lösungsmittel, die in allen biochemischen Labors routinemässig verwendet werden, automatisch und zuverlässig Pipettieren zu können. Das Erfassen aller dieser Parameter (und allenfalls noch zusätzlicher Parameter, wie z.B. die Benetzbarkeit der Pipettenspitze in Abhängigkeit der zu pipettierenden Flüssigkeit bzw. des für die Pipettenspitze verwendeten Materials) würde aber einen zu grossen maschinellen und zeitlichen Aufwand bedingen. Dies vor allem dann, wenn im Fall einer automatisierten Arbeitsstation der Durchsatz von Hunderten oder Tausenden von Proben innert möglichst kurzer Zeit gewährleistet sein muss. Erschwerend kommt sicherlich dazu, wenn es sich bei den Lösungsmitteln bzw. Flüssigkeitsproben um unbekannte Zusammensetzungen mit unbekannten physikalischen Parametern handelt, die ebenfalls möglichst automatisch pipettiert werden sollten.

Der vorliegenden Erfindung liegt deshalb die Aufgabe zu Grunde, ein alternatives Verfahren vorzuschlagen, mit welchem für Flüssigkeitsproben auf einfache Art und Weise Pipettierparameter ausgewählt und die Flüssigkeitsproben nach Bedarf pipettiert werden können.

Diese Aufgabe wird beispielsweise dadurch gelöst, dass ein Verfahren vorgeschlagen wird, bei dem ein Fluidraum mit einem Messraum in Verbindung steht und der Innendruck dieses Messraums mit einem Druckfühler überwacht wird, und bei dem zumindest ein erster Teil dieses Fluidraums mit einer Probe dieser Flüssigkeit in Fluidverbindung gebracht wird. Das erfindungsgemässe Verfahren ist in diesem Fall dadurch gekennzeichnet, dass in einer im Fluidraum angeordneten, im wesentlichen zusammenhängende Fluidsäule Druckveränderungen erzeugt werden, wobei diese Druckveränderungen in dem pneumatisch mit der Fluidsäule verbundenen Messraum entsprechende Druckveränderungen bewirken, welche vom Druckfühler aufgenommen und in Messsignale umgewandelt werden, welche Messsignale von einem Rechner verarbeitet und als Druckkurve wiedergegeben werden, und wobei der Verlauf dieser Druckkurve mit dem Verlauf bekannter Druckkurven verglichen wird.

Tatsächlich wird - in einer Art "Annäherung an die Erfahrung eines Experimentators" - summarisch festgestellt, wie sich die Flüssigkeit in einem bekannten Pipetier-System verhält. Dies wurde oben durch das Erfassen der Veränderung des Pipetten-Innendrucks ausgeführt. Erfindungsgemäss kann dieses Verfahren bereits beim Eintauchen in eine zu pipettierende Flüssigkeit oder während dem Aspirieren dieser Flüssigkeit ausgeführt werden.

Weitere entsprechend der vorliegenden Erfindung ausgewählte Parameter, die zu vergleichbaren Resultaten führen, umfassen das Erfassen der Veränderungen dieses ausgewählten Parameters beim Aspirieren der zu pipettierenden Flüssigkeit in Form:
- des aktuellen Flusses der Systemflüssigkeit oder der zu pipettierenden Flüssigkeit in einer Pipette;
- des Gesamtgewichts eines Behälters, aus dem heraus eine zu pipettierende Flüssigkeit aspiriert wird;
- der Leistungsaufnahme des DC-Motors, der beim Aspirieren der zu pipettierenden Flüssigkeit zum Bewegen des Pumpenkolbens verwendet wird;
- der Leistungsaufnahme des Piezoantriebs einer Mikromembranpumpe, die beim Aspirieren der zu pipettierenden Flüssigkeit zum Erzeugen eines Unterdruckes in der Pipettenspitze verwendet wird.

Diese Aufgabe wird gemäss einem ersten Aspekt durch ein Verfahren mit den Merkmalen des Anspruchs 1 gelöst. Diese Aufgabe wird gemäss einem zweiten Aspekt dadurch gelöst, dass ein alternatives Verfahren mit den Merkmalen des Anspruchs 6 vorgeschlagen wird. Zusätzliche, bevorzugte erfinderische Merkmale ergeben sich jeweils aus den abhängigen Ansprüchen.

Eine solche Flüssigkeit kann anschliessend korrekt pipettiert, d.h. mit einer Pipette in einer bestimmten Menge bzw. in einem bestimmten Volumen in einen Behälter, z.B. ein Well einer Mikroplatte, abgegeben bzw. dispensiert werden. Zu diesem Zweck wird ein Parametersatz für das Ansteuern des Pipetiergeräts zum Abgeben von Flüssigkeitsproben ausgewählt. Diese Auswahl erfolgt manuell oder automatisch dadurch, dass aus einer Bibliothek von Parametersätzen auf Grund von festgelegten Toleranzbereichen derjenige Parametersatz ausgewählt wird, der den gestellten Anforderungen am nächsten kommt.

Das erfindungsgemässe Verfahren wird nun an Hand von schematischen, den Umfang der Erfindung nicht beschränkenden Zeichnungen von beispielhaften Ausführungsformen im Detail erläutert. Dabei zeigen:
- Fig. 1: einen Vertikalschnitt durch ein zum Ausführen des erfindungsgemässen Verfahrens geeigneten Geräts bzw. Systems, gemäss einer ersten Ausführungsform und gemäss einer ersten Verwendung;
- Fig. 2: einen Vertikalschnitt durch ein zum Ausführen des erfindungsgemässen Verfahrens geeigneten Geräts bzw. Systems, gemäss einer zweiten Ausführungsform und gemäss einer zweiten Verwendung;
- Fig. 3: einen Vertikalschnitt durch ein zum Ausführen des erfindungsgemässen Verfahrens geeigneten Geräts bzw. Systems, gemäss einer dritten Ausführungsform und gemäss einer dritten Verwendung;
- Fig. 4: einen Vertikalschnitt durch ein zum Ausführen des erfindungsgemässen Verfahrens geeigneten Geräts bzw. Systems, gemäss einer dritten Ausführungsform und gemäss einer vierten Verwendung;
- Fig. 5: einen Vertikalschnitt durch ein zum Ausführen des erfindungsgemässen Verfahrens geeigneten Geräts bzw. Systems, gemäss einer dritten Ausführungsform und gemäss einer fünften Verwendung;
- Fig. 6: einen Vertikalschnitt durch ein zum Ausführen des erfindungsgemässen Verfahrens geeigneten Geräts bzw. Systems, gemäss einer dritten Ausführungsform mit einer Kolbenpumpe;
- Fig. 7: Druckveränderungen im Messraum eines zum Ausführen des erfindungsgemässen Verfahrens geeigneten Pipetiergeräts bzw. Pipetiersystems, die durch ein für eine bestimmte Fluidsäule charakteristisches Schwingungsverhalten (hier für Wasser) erzeugbar sind;
- Fig. 8: einen Vertikalschnitt durch ein zum Ausführen des erfindungsgemässen Verfahrens geeigneten Geräts bzw. Systems, gemäss einer dritten Ausführungsform mit einer motorisierten Kolbenpumpe;
- Fig. 9: einen Teilschnitt durch eine elektronmechanische Variante einer alternativen, pumpen-unabhängigen Impulseinheit, mit welcher Druckveränderungen im Fluidraum erzeugbar sind;
- Fig. 10: den Verlauf einer typischen Druckkurve für Wasser als Probenflüssigkeit;
- Fig. 11: eine annährende Superposition von drei individuellen, mit Wasser erzielten Druckkurven;
- Fig. 12: den Verlauf einer typischen Druckkurve für ein Wasser/DMSO - Gemisch als Probenflüssigkeit;
- Fig. 13: eine annährende Superposition von drei individuellen, mit dem Wasser/DMSO - Gemisch (1:1) erzielten Druckkurven;
- Fig. 14: den Verlauf einer typischen Druckkurve für DMSO als Probenflüssigkeit;
- Fig. 15: eine annährende Superposition von drei individuellen, mit DMSO erzielten Druckkurven;
- Fig. 16: den Verlauf einer typischen Druckkurve für ein Wasser/PEG - Gemisch (7% PEG in Wasser) als Probenflüssigkeit;
- Fig. 17: eine annährende Superposition von drei individuellen, mit dem Wasser/PEG - Gemisch erzielten Druckkurven;
- Fig. 18: den Verlauf einer typischen Druckkurve für Acetonitril als Probenflüssigkeit;
- Fig. 19: eine annährende Superposition von vier individuellen, mit Acetonitril erzielten Druckkurven;
- Fig. 20: den Verlauf einer typischen Druckkurve für Aceton als Probenflüssigkeit;
- Fig. 21: eine annährende Superposition von vier individuellen, mit Aceton erzielten Druckkurven.
- Fig. 22: Flussveränderungen in der Pipette eines zum Ausführen des erfindungsgemässen Verfahrens geeigneten Pipetiergeräts bzw. Pipetiersystems beim Aspirieren und Dispensieren einer Wasserprobe;
- Fig. 23: Flussveränderungen in der Pipette eines zum Ausführen des erfindungsgemässen Verfahrens geeigneten Pipetiergeräts bzw. Pipetiersystems beim Aspirieren und Dispensieren einer Luftprobe;
- Fig. 24: eine Superposition der Flussveränderungs-Kurven von Fig. 22 "Wasser" und 23 "Luft";
- Fig. 25: eine Subtraktionsdarstellung der Flussveränderungs-Kurven Fig. 22 "Wasser" minus 23 "Luft";
- Fig. 26: eine Schnittdarstellung durch eine Mikromembranpumpe zum Erzeugen eines Unterdrucks in der Pipettenspitze zum Aspirieren einer Flüssigkeitsprobe und zum Erzeugen eines Überdrucks in der Pipettenspitze zum Dispensieren einer Flüssigkeitsprobe.

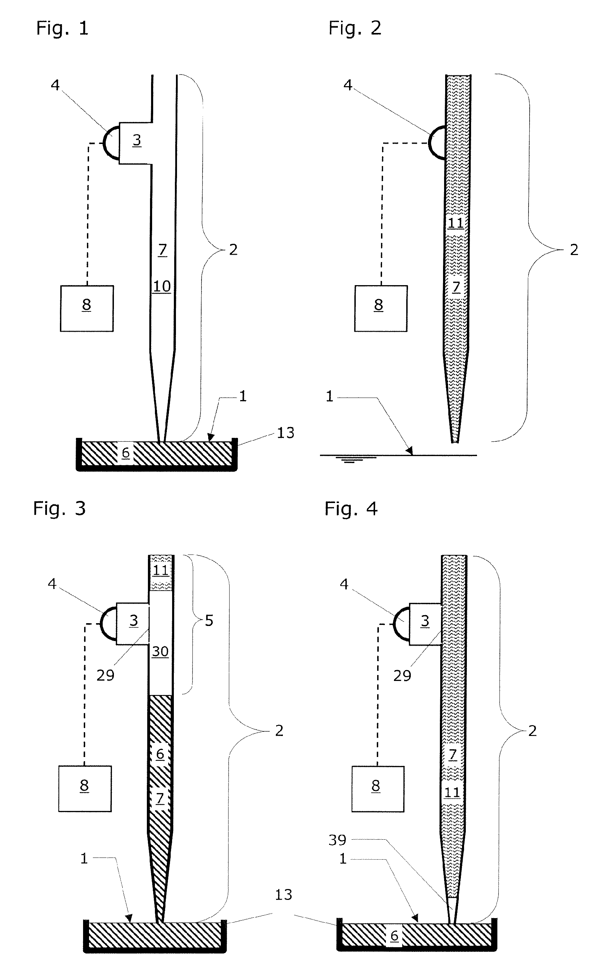

Figur 1 zeigt einen Vertikalschnitt durch ein zum Ausführen des erfindungsgemässen Verfahrens geeigneten Geräts bzw. Systems, gemäss einer ersten Ausführungsform und gemäss einer ersten Verwendung. Diese Vorrichtung umfasst einen Fluidraum 2, der mit einem Messraum 3 in Verbindung steht. Diese Verbindung ist hier als ein direkter, offener Durchgang zwischen den beiden Räumen 2,3 ausgebildet. Der Innendruck des Messraums 3 wird mit einem Druckfühler 4 überwacht, der mit einem Rechner 8 verbunden ist. In einer alternativen Ausführungsform könnte der Druckfühler direkt mit dem Fluidraum verbunden sein (vgl. Fig. 2). Ein erster Teil 5 der Fluidraums, der hier den ganzen Fluidraum 2 einer Pipette oder Pipettenspitze umfasst, ist hier mit einem Gas gefüllt. Die Pipettenspitze berührt die Oberfläche einer Flüssigkeit 1, die als Probe 6 in einem Behälter 13 vorgelegt ist. Solche Behälter können eine beliebige Form und einen beliebigen Inhalt aufweisen und sind z.B. als Probenröhrchen, Wells einer Mikroplatte, Tröge, oder Petrischale ausgebildet. Beim Eintauchen der Pipettenspitze in die Probenflüssigkeit 6 erfährt die Fluidsäule 7, die hier ganz von einem Gas gebildet ist, Druckveränderungen bzw. Druckschwankungen.

Figur 2 zeigt einen Vertikalschnitt durch ein zum Ausführen des erfindungsgemässen Verfahrens geeigneten Geräts bzw. Systems, gemäss einer zweiten Ausführungsform und gemäss einer zweiten Verwendung. Diese Vorrichtung umfasst einen Fluidraum 2, der mit einem Messraum 3 in Verbindung steht. Tatsächlich bildet hier der Fluidraum 2 gleichzeitig auch den Messraum 3. Der Innendruck des Messraums 3 wird mit einem Druckfühler 4 überwacht, der mit einem Rechner 8 verbunden ist. Der Fluidraum 2 einer Pipette oder Pipettenspitze berührt die Oberfläche einer Flüssigkeit 1. Beim Eintauchen der Pipettenspitze in die Flüssigkeit 1 erfährt die Fluidsäule 7, die hier ganz von einer Systemflüssigkeit 11 gebildet ist, Druckveränderungen bzw. Druckschwankungen.

Figur 3 zeigt einen Vertikalschnitt durch ein zum Ausführen des erfindungsgemässen Verfahrens geeigneten Geräts bzw. Systems, gemäss einer dritten Ausführungsform und gemäss einer dritten Verwendung. Diese Vorrichtung umfasst einen Fluidraum 2, der mit einem Messraum 3 in Verbindung steht. Diese Verbindung ist hier als eine zwischen den beiden Räumen 2,3 abdichtend angeordnete, flexible Membran 29 ausgebildet. Der Innendruck des Messraums 3 wird mit einem Druckfühler 4 überwacht, der mit einem Rechner 8 verbunden ist. Ein erster Teil 5 des Fluidraums, der hier nur den hinteren Teil des Fluidraums 2 einer Pipette oder Pipettenspitze umfasst, ist hier mit einem air-gap 39 und mit Systemflüssigkeit 11 gefüllt. Die Systemflüssigkeit 11 kann hier aber auch weggelassen werden. Vorzugsweise ist, vor allem in der ersten Ausführungsform (vgl. Fig. 1), in welcher diese Verbindung als ein direkter, offener Durchgang zwischen den beiden Räumen 2,3 ausgebildet ist, das air-gap 39 in der Region des Messraums 3 angeordnet. Bei der hier vorliegenden Ausführungsform ist dies jedoch nicht zwingend, weil die Membran 29 der Messraum 3 vor eindringender Proben- oder Systemflüssigkeit schützt. Die Pipettenspitze ist etwas in die Flüssigkeit 1 eingetaucht und Probenflüssigkeit 6 wurde bereits in die Pipettenspitze aufgezogen. Beim Aufziehen bzw. Aspirieren von Probenflüssigkeit 6 erfährt die Fluidsäule 7, die hier Probenflüssigkeit 6, ein Gas und eventuell Systemflüssigkeit 11 umfasst, Druckveränderungen bzw. Druckschwankungen.

Figur 4 zeigt einen Vertikalschnitt durch ein zum Ausführen des erfindungsgemässen Verfahrens geeigneten Geräts bzw. Systems, gemäss einer dritten Ausführungsform und gemäss einer vierten Verwendung. Diese Vorrichtung ist gleich ausgebildet wie die in Fig. 3 gezeigte. Der ganze Fluidraum 2 einer Pipette oder Pipettenspitze, ist hier im Bereich der Spitze mit einem air-gap 39 und sonst mit Systemflüssigkeit 11 gefüllt. Bei der hier vorliegenden Ausführungsform schützt die Membran 29 den Messraum 3 vor eindringender Systemflüssigkeit 11. Die Pipettenspitze ist etwas in die Flüssigkeit 1 eingetaucht. Beim Eintauchen von Probenflüssigkeit 6 erfährt die Fluidsäule 7, die hier ein Gas und Systemflüssigkeit 11 umfasst, Druckveränderungen bzw. Druckschwankungen.

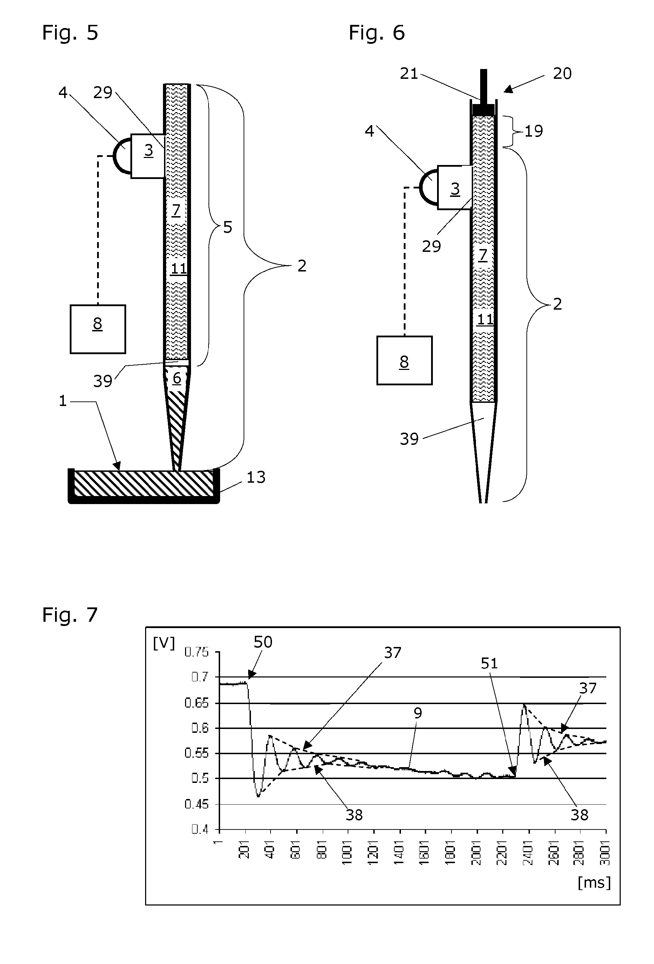

Figur 5 zeigt einen Vertikalschnitt durch ein zum Ausführen des erfindungsgemässen Verfahrens geeigneten Geräts bzw. Systems, gemäss einer bevorzugten dritten Ausführungsform und gemäss einer fünften Verwendung. Diese Vorrichtung ist gleich ausgebildet wie die in den Figuren 3 und 4 gezeigte. Der ganze Fluidraum 2 einer Pipette oder Pipettenspitze, ist hier im Bereich der Spitze bereits mit Probenflüssigkeit 6 gefüllt, welche mittels einem kleinen air-gap 39 von der Systemflüssigkeit 11 getrennt ist. Bei der hier vorliegenden Ausführungsform schützt die Membran 29 den Messraum 3 vor eindringender Systemflüssigkeit 11. Der Messraum 3 kann mit einem Gas (z.B. Luft oder N₂) gefüllt sein. Falls der Messraum mit einer Flüssigkeit (z.B. Öl, Wasser) gefüllt ist, kann er zusätzlich eine Gasblase umfassen, die den Sensor von der Flüssigkeit trennt. Die Pipettenspitze ist immer noch etwas in die Flüssigkeit 1 eingetaucht. Beim Aufnehmen bzw. Aspirieren von Probenflüssigkeit 6 erfährt die Fluidsäule 7, die hier ein Gas und Systemflüssigkeit 11 umfasst, Druckveränderungen bzw. Druckschwankungen.

In den bisher beschriebenen Figuren 1 bis 5 ist die Pipette über eine Leitung an einer Pumpe angeschlossen (beides nicht gezeigt). Solche Pumpen können beliebig ausgewählt werden und sind je nach dem zum Abgeben grösserer Volumina im Bereich von Mikrolitern oder im Bereich von kleinen Volumina im Bereich von Nano- bis Picoliter ausgebildet. Die beschriebenen Druckveränderungen bewirken jeweils im pneumatisch mit der Fluidsäule 7 verbundenen Messraum 3 ebenfalls Druckveränderungen, welche vom Druckfühler 4 aufgenommen und in Messsignale umgewandelt werden. Diese Messsignale werden von dem Rechner 8 verarbeitet und als Druckkurve 9 (vgl. z.B. Fig. 7) wiedergegeben. Der Verlauf dieser Druckkurve 9 kann daraufhin mit dem Verlauf bekannter Druckkurven verglichen werden. Weil jede dieser Druckkurven für eine bestimmte Probenflüssigkeit 6 charakteristisch ist, können für die aktuell vorliegende Flüssigkeit 1 an Hand dieses Vergleichs Pipettierparameter ausgewählt werden. Ein wesentlicher Vorteil der vorliegenden Erfindung beruht somit darin, dass durch eine einmalige Prüfung und einen einfachen Vergleich eine bisher unbekannte Probenflüssigkeit charakterisiert und ihr Pipettierparameter zugeordnet werden können, ohne dass viele einzelne Parameter dieser Probenflüssigkeit in einer entsprechenden Vielzahl von Experimenten bestimmt werden müssen.

Figur 6 zeigt einen Vertikalschnitt durch ein zum Ausführen des erfindungsgemässen Verfahrens geeigneten Geräts bzw. Systems, gemäss einer dritten Ausführungsform mit einer Kolbenpumpe. Die Ausführungsform und die Verwendung entsprechen denjenigen, die im Zusammenhang mit Fig. 4 beschrieben wurden.

Hier ist die Fluidsäule 7, welche im Bereich der Pipettenspitze ein air-gap 39 umfasst im wesentlichen durch die Systemflüssigkeit 11 gebildet. Durch eine, je nach gerätebedingter Konstruktion längere oder kürzere, erste Leitung 19, welche ebenfalls mit Systemflüssigkeit gefüllt ist, wird die Fluidsäule 7 bis zum Kolben 21 einer Kolbenpumpe 20 verlängert. Diese Kolbenpumpe 20 dient zum Erzeugen eines Unterdrucks im Fluidraum 2 zum Aspirieren und zum Erzeugen eines Überdrucks im Fluidraum 2 zum Dispensieren von Flüssigkeitsproben 6. Diese Kolbenpumpe 20 dient zudem als Impulseinheit 17, mit welcher die im wesentlichen homogene Fluidsäule 7, die sich bis zum air-gap 39 erstreckt, in Schwingungen versetzt werden kann. Dabei schützt die Membran 29 den Messraum 3 vor eindringender Systemflüssigkeit. Die Pipettenspitze ist im Moment von einer Probenflüssigkeit 6 entfernt, so dass die hier Abgebildete Situation dann auftritt, wenn die Pipette mit Systemflüssigkeit und einem air-gap für eine Probenaufnahme vorbereitet wird. In dieser Phase dient der Druckfühler 4 zum Feststellen von allfälligen Gasblasen in der Fluidsäule, die durch charakteristische Veränderungen in den durch die Impulseinheit 17 hervorgerufenen Druckschwankungen entdeckt werden können.

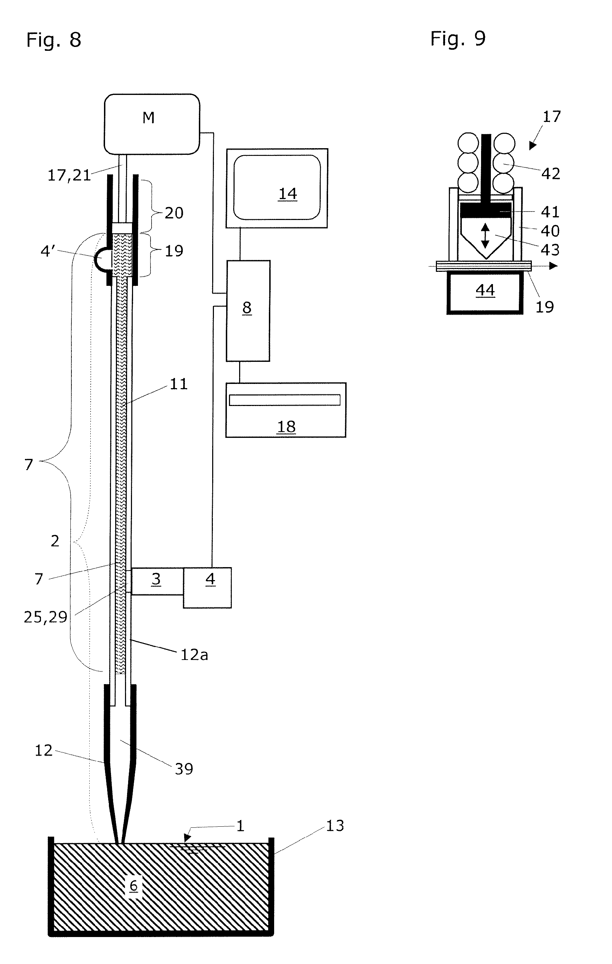

Für Vorrichtungen, d.h. Pipetiergeräte welche sich ganz besonders gut zur Durchführung des erfindungsgemässen Verfahrens eignen, hat der Anmelder der vorliegenden Patentanmeldung am 10. Dezember 2004 unter der Nummer US 11/009,247 beim United States Patent and Trademark Office (USPTO) zum Patent angemeldet. Diese in der eben zitierten Prioritätsanmeldung beschriebenen Pipetiergeräte unterscheiden sich vom bekannten Stand der Technik dadurch, dass sie zusätzlich zu den bereits im Zusammenhang mit den Dokumenten US 4,675,301, US 4,794,085 und US 5,723,795 benannten Merkmalen eine Impulse erzeugende Einrichtung umfassen, welche mit der sich innerhalb des Fluidraums befindlichen Flüssigkeitssäule in Wirkverbindung steht. Die Impulse erzeugende Einrichtung ist dabei so ausgebildet, dass sie eine Vertikalbewegung der Flüssigkeitssäule verursacht, welche wiederum Druckdifferenzen in dem Gasraum verursacht, der pneumatisch mit dem Fluidraum verbunden ist. Diese Druckdifferenzen werden vom Drucksensor detektiert und vom Druckfühler in Form von entsprechenden Signalen an einen mit diesem verbundenen Rechner abgegeben. An Hand der darauf vom Rechner gelieferten Daten kann auf das Erreichen einer Flüssigkeitsoberfläche in einem Behälter ("liquid level detection"), auf das Vorhandensein von Gasblasen in der sich im Fluidraum befindenden Systemflüssigkeit, bzw. auf das Vorhandensein oder Fehlen eines Filters in der Pipettenspitze geschlossen werden. Zur Verwendung bei der Durchführung des erfindungsgemässen Klassifizierverfahrens speziell bevorzugte Ausführungsformen eines Pipetiergerätes gemäss US 11/009,247 sind hier in den Figuren 8 bzw. 9 dargestellt.

Grundsätzlich erzeugen alle plötzlichen bzw. abrupten Bewegungen des die Fluidsäule 7 enthaltenden Teils des Pipetiergeräts Druckveränderungen im Messraum 3 eines zum Ausführen des erfindungsgemässen Verfahrens geeigneten Pipetiergeräts bzw. Pipetiersystems. Solche Druckveränderungen können z.B. als einzelne Druckstösse oder auch als Druckschwingungen auftreten, wobei jeder bestimmten Fluidsäule 7 ein charakteristisches Schwingungsverhalten zuordenbar ist.

Figur 7 zeigt eine Druckkurve 9, indem die gemessenen Druckwerte (in Volt) gegenüber einer Zeitachse (in Millisekunden) aufgetragen sind. Die Druckkurve 9 zeigt charakteristische Druckveränderungen, die in diesem Fall in einer mit Wasser als Systemflüssigkeit 11 gefüllten Fluidsäule erzeugt wurden. Die Probenflüssigkeit 6 war ebenfalls Wasser, das durch ein air-gap 39 von der Systemflüssigkeit 11 getrennt war (vgl. Ausführungsform ohne Membran 29 gemäss Fig. 1, aber Verwendung gemäss Fig. 3). Der Beginn der Aspiration (=Aspirationsbeginn), bei dem der Kolben 21 der Pumpe 20 in Bewegung gesetzt wurde, wird mit 50 bezeichnet. Dieser plötzliche, einseitige Impuls, der auf die Fluidsäule abgegeben wird, erzeugt eine Schwingung der Fluidsäule, welche als Druckänderungen im Messraum 3 detektiert werden. Das Ende der Aspiration (=Aspirationsende) wird mit 51 bezeichnet. Dieser plötzliche, einseitig gegengerichtete Impuls, der auf die Fluidsäule abgegeben wird, erzeugt wieder eine Schwingung der Fluidsäule, welche ebenfalls als Druckänderungen im Messraum 3 detektiert werden. Der jeweils gezeigte Verlauf der oberen und unteren Hüllkurven 37,38 der Druckkurve 9 ist charakteristisch für Wasser. Das Aspirieren über eine Zeit von etwa zwei Sekunden bewirkte einen Druckabfall um einen Wert, der etwa 0.2 V entspricht.

Figur 8 zeigt einen Vertikalschnitt durch eine Pipettiervorrichtung. Dieses zum Ausführen des erfindungsgemässen Verfahrens geeignete Gerät bzw. System gemäss der dritten Ausführungsform umfasst eine Kolbenpumpe 20 (vgl. Fig. 6). Diese Pumpe ist vorzugsweise eine "CAVRO XP3000 plus Modular Digital Pump" (Tecan Systems Inc., 2450 Zanker Road, San José, CA 95138, USA) oder eine Balgpumpe, wie sie z.B. aus US 5,638,986 bekannt ist. Angetrieben wird der Kolben 21 durch den Motor M. Diese Vorrichtung umfasst zudem eine an sich bekannte, wegwerfbare Pipettenspitze 12, die auf eine die Fluidsäule 7 enthaltende, rohrförmige Pipette aufgesteckt ist. Die Pipettenspitze 12 ist an einer Halterung 12a befestigt. Die Fluidsäule 7 wird durch eine Systemflüssigkeit 11 gebildet. Der Fluidraum 2 erstreckt sich vom aktiven Teile der Pumpe, d.h. vom Kolben 21, über eine entsprechend den Geräterfordernissen ausgebildete Leitung 19, die Fluidsäule 2 und ein air-gap 39 bis zur Spitze der Pipettenspitze 12. Die ganze, wegnehmbare Pipettenspitze 12 ist mit einem Gas (üblicherweise Luft) gefüllt und leicht in eine Flüssigkeitsprobe 6 eingetaucht, die sich in einem Behälter 13 befindet. Das Eintauchen der Pipettenspitze 12 in die Probenflüssigkeit 6 bewirkte in der Fluidsäule 7 Druckveränderungen bzw. Druckschwankungen. Diese Druckveränderungen bewirken im pneumatisch mit der Fluidsäule 7 verbundenen (vorzugsweise durch eine flexible Membran 29 getrennten) Messraum 3 ebenfalls Druckveränderungen, welche vom Druckfühler 4 aufgenommen und in Messsignale umgewandelt werden. Diese Messsignale werden von dem Rechner 8 verarbeitet und als Druckkurve 9 (vgl. z.B. Fig. 7) auf dem Bildschirm 14 oder dem Drucker 18 wiedergegeben und damit einem Operator angezeigt werden können. Diese erste Druckkurve zeigt das Eindringen der Pipettenspitze 12 in die Flüssigkeit 1 an und stellt somit ein Mittel zum Detektieren der Flüssigkeitsoberfläche 1 (= LIQUID LEVEL DETECTION) dar. Es handelt sich hier somit um ein Detektieren einer Flüssigkeitsoberfläche mittels Druckmessung. Ein solches Detektieren ist deshalb unabhängig davon, ob die aufzunehmende Flüssigkeit 1 elektrisch leitend ist oder nicht. Somit ist die Vorrichtung bereit, den Aspirationsprozess zu beginnen. Vorzugsweise umfasst diese Vorrichtung einen zusätzlichen Druckfühler 4' im Bereich der Leitung 19, welche als sogenanntes "Tubing" die Pipette mit der Kolbenpumpe 20 verbindet. Dieser zusätzliche Druckfühler 4' ist vorzugsweise ebenfalls mit dem Rechner 8 verbunden (nicht gezeigt). Alternative Pipettenspitzen umfassen die gezeigten Wegwerftips aus inertem Kunststoffmaterial, z.B. aus kostengünstigem Polypropylen. Auch Stahlnadeln (mit oder ohne z.B. mit Titan, Platin oder Teflonderivaten beschichteten Spitzen) sind ebenfalls verwendbar und werden dann vorzugsweise als fix installierte, nicht wegwerfbare Pipettenspitzen verwendet.

Figur 9 zeigt einen Teilschnitt durch eine elektronmechanische Variante einer alternativen, pumpen-unabhängigen Impulseinheit 17, mit welcher ebenfalls Druckveränderungen im Fluidraum 2 erzeugbar sind. Die Leitung 19 wird durch einen Zylinder 40 geführt. Im Innern dieses Zylinders 40 ist ein Kolben 41 mit einem Keil 43 angeordnet, der im wesentlichen rechtwinklig gegen die geschlossene Oberfläche der Leitung 19 bewegbar ist. Der Keil 43 ist vorzugsweise aus weichem Kunststoffmaterial und/oder weist ein abgerundete Kante auf, damit die Leitung 19 nicht beschädigt wird. Es können auch andere Formen für den Keil 43 gewählt werden, wie Kugeln oder Körper mit ebenen oder gekrümmten Flächen. Ein vorzugsweise fester Boden 44 schliesst den Zylinder 40 auf der dem Kolben 41 gegenüber liegenden Seite ab. Diese Bewegung deformiert reversibel die Leitung 19, was den besagten Impuls auslöst. Es können Einzelimpulse oder auch Impulsserien ausgelöst werden, so dass die Fluidsäule nur kurz bewegt oder aber in eine Schwingung versetzt werden kann. Vorzugsweise kann diese Impulseinheit unabhängig vom Bewegen der Pipette in einer X-, Y- oder Z-Richtung und unabhängig vom Betrieb der Pumpe 2o betrieben werden. Diese Impulseinheit 17 eignet sich vorzüglich zum Detektieren von Gasblasen in der Systemflüssigkeit 11, welche sich im Fluidraum 2 befindet. Als Antrieb dient z.B. eine Spule 42.

### Anwendungsbeispiele

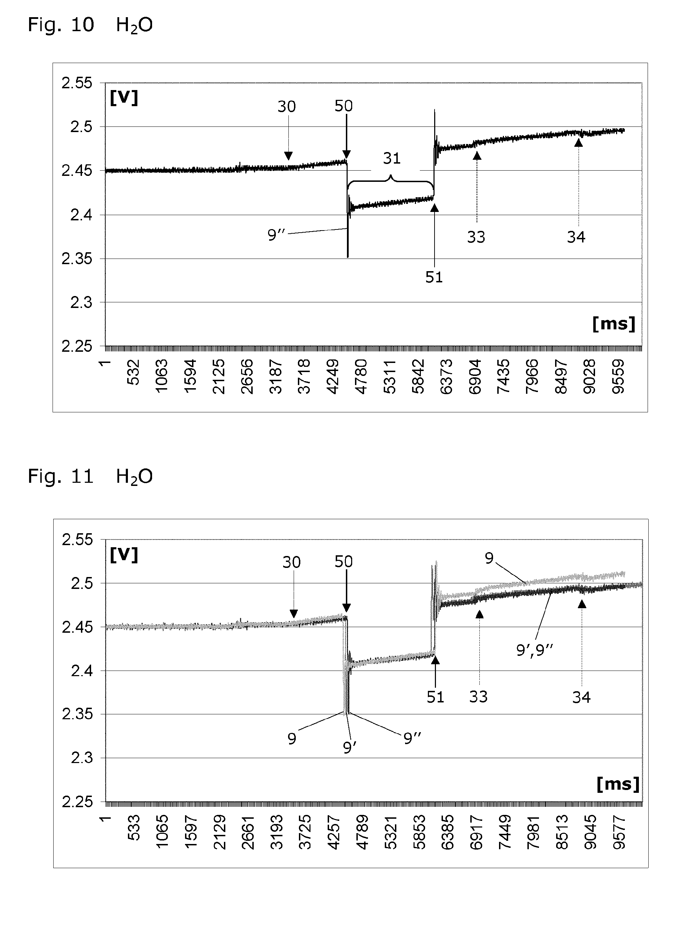

Alle im Folgenden beschriebenen Figuren zeigen eine Druckkurve 9 oder mehrere Druckkurven 9,9',9", indem die gemessenen Druckwerte (in Volt) gegenüber einer Zeitachse (in Millisekunden) aufgetragen sind. In allen Fällen wurde die Druckkurven in einer mit Wasser als Systemflüssigkeit 11 gefüllten Fluidsäule erzeugt. Die Probenflüssigkeit 6, war in allen Fällen durch ein air-gap 39 von der Systemflüssigkeit 11 getrennt (vgl. Fig. 3). In allen Figuren 10 bis 25 sind die wesentlichen Vorgänge mit den gleichen Bezugszeichen wie folgt bezeichnet:
- 30: Eintauchen der Pipettenspitze in die Probenflüssigkeit
- 31: Aspiration / 31c Ausstoss einer Blase
- 32: Dispens
- 33: Beginn Zurückziehen der Pipettenspitze aus der Probenflüssigkeit 33a Zwischenniveau / 33b Wendepunkt beim Beginn Zurückziehen
- 34: Ende Zurückziehen der Pipettenspitze aus der Probenflüssigkeit
- 35: Störsignale durch weitere Fahrbewegungen, bzw. Abwurf d. Pipettenspitze
- 50: Aspirationsbeginn
- 51: Aspirationsende

Das Aufnehmen von Probenflüssigkeit 6 (Aspiration) erfolgte jeweils nach dem eintauchen in die Flüssigkeit 1 um 10 Schritte mit einer errechneten Flussgeschwindigkeit von 180 µl/sec und während einer Dauer von ca. 2 Sekunden.

Figur 10 zeigt eine einzelne charakteristische Druckkurve 9" für die Probenflüssigkeit Wasser. Der Druck in der Pipette, d.h. im Fluidraum 2 und damit im Messraum 3 steigt ab dem Eintauchen 30 langsam und kontinuierlich an, was auf eine Kapillarwirkung der Pipettenspitze und damit in diese eindringendes Wasser zurückgeführt werden kann. Beim Aspirationsbeginn 50 fällt der Druck zuerst um 0.1 V und schwingt dann symmetrisch auf einen um ca. 0.05 V erniedrigten Druck ein. Am Aspirationsende 51 steigt der Druck zuerst um 0.1 V an und schwingt dann wiederum symmetrisch auf einen um ca. 0.05 V höheren Druck ein. Beim Beginn 33 des Zurückziehens der Pipettenspitze aus der Probenflüssigkeit steigt der Druck nur unwesentlich an und fällt beim Ende 34 des Zurückziehens der Pipettenspitze aus der Probenflüssigkeit um etwa den gleichen Betrag. Es fällt auf, dass der anfänglich bemerkte, kontinuierliche Druckanstieg sich mit gleicher Steigung zwischen den Endpunkten der beschriebenen Aktivitäten fortsetzt.

Figur 11 zeigt drei charakteristische Druckkurven 9,9',9" für die Probenflüssigkeit Wasser. Die hohe Reproduzierbarkeit der Resultate ist offensichtlich.

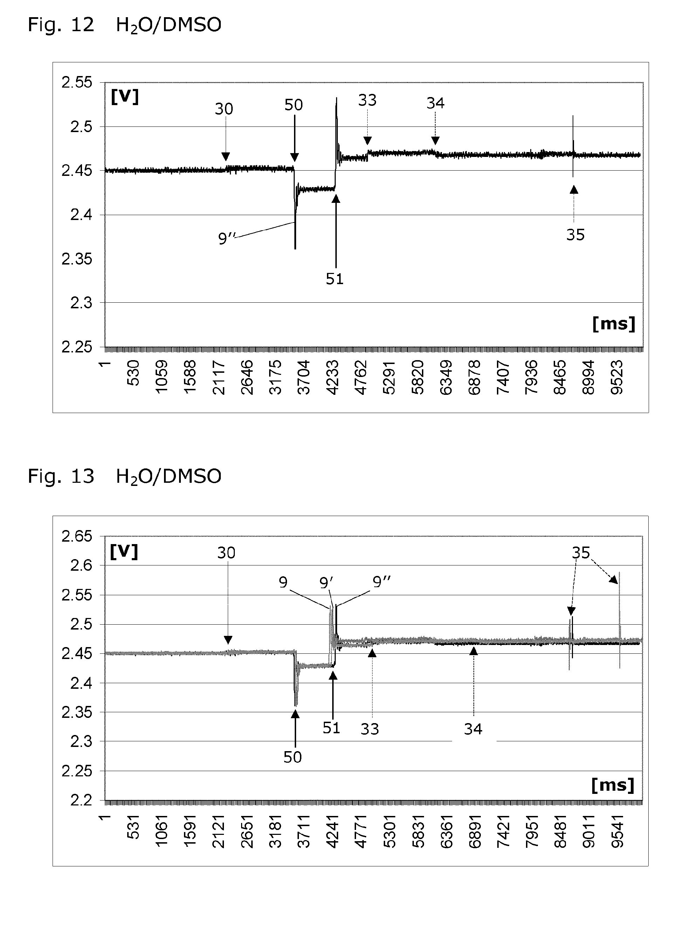

Figur 12 zeigt eine einzelne charakteristische Druckkurve 9" für eine Probenflüssigkeit mit einem Wasser/DMSO-Gemisch. Das Verhältnis von Wasser zu Dimethylsulfoxid betrug 1:1. Der Druck in der Pipette, d.h. im Fluidraum 2 und damit im Messraum 3 steigt ab dem Eintauchen 30 nicht wesentlich an. Beim Aspirationsbeginn 50 fällt der Druck zuerst um 0.08 V und schwingt dann asymmetrisch auf einen um ca. 0.025 V erniedrigten Druck ein. Am Aspirationsende 51 steigt der Druck zuerst um 0.1 V an und schwingt dann wiederum asymmetrisch auf einen um ca. 0.015 V höheren Druck ein. Beim Beginn 33 des Zurückziehens der Pipettenspitze aus der Probenflüssigkeit steigt der Druck nur unwesentlich an und fällt beim Ende 34 des Zurückziehens der Pipettenspitze aus der Probenflüssigkeit um etwa den gleichen Betrag. Es fällt auf, dass der Druck zwischen den Endpunkten der beschriebenen Aktivitäten konstant ist.

Figur 13 zeigt drei charakteristische Druckkurven 9,9',9" für die Probenflüssigkeit mit dem Wasser/DMSO-Gemisch im Verhältnis 1:1. Die hohe Reproduzierbarkeit der Resultate ist offensichtlich. Die grösste Variation betrifft den Zeitpunkt des Austauchens 35 mit der Pipettenspitze.

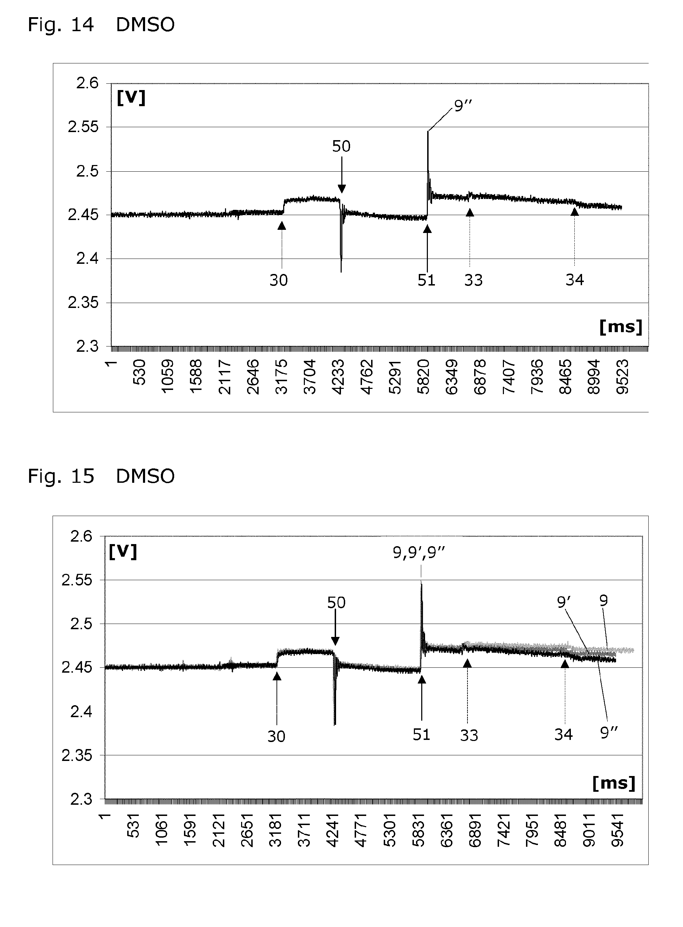

Figur 14 zeigt eine einzelne charakteristische Druckkurve 9" für die Probenflüssigkeit DMSO. Der Druck in der Pipette, d.h. im Fluidraum 2 und damit im Messraum 3 steigt ab dem Eintauchen 30 um 0.015 V merkbar an. Beim Aspirationsbeginn 50 fällt der Druck zuerst um 0.066 V und schwingt dann symmetrisch in etwa um den Ausgangsdruck ein. Am Aspirationsende 51 steigt der Druck zuerst um 0.1 V an und schwingt dann asymmetrisch auf einen um ca. 0.02 V höheren Druck ein. Beim Beginn 33 des Zurückziehens der Pipettenspitze aus der Probenflüssigkeit steigt der Druck nur unwesentlich an und fällt beim Ende 34 des Zurückziehens der Pipettenspitze aus der Probenflüssigkeit um etwa den gleichen Betrag. Es fällt auf, dass der Druck zwischen den Endpunkten der beschriebenen Aktivitäten konstant, mehrheitlich aber mit unterschiedlicher Steigung leicht fallend ist.

Figur 15 zeigt drei charakteristische Druckkurven 9,9',9" für die Probenflüssigkeit DMSO. Die hohe Reproduzierbarkeit der Resultate ist offensichtlich.

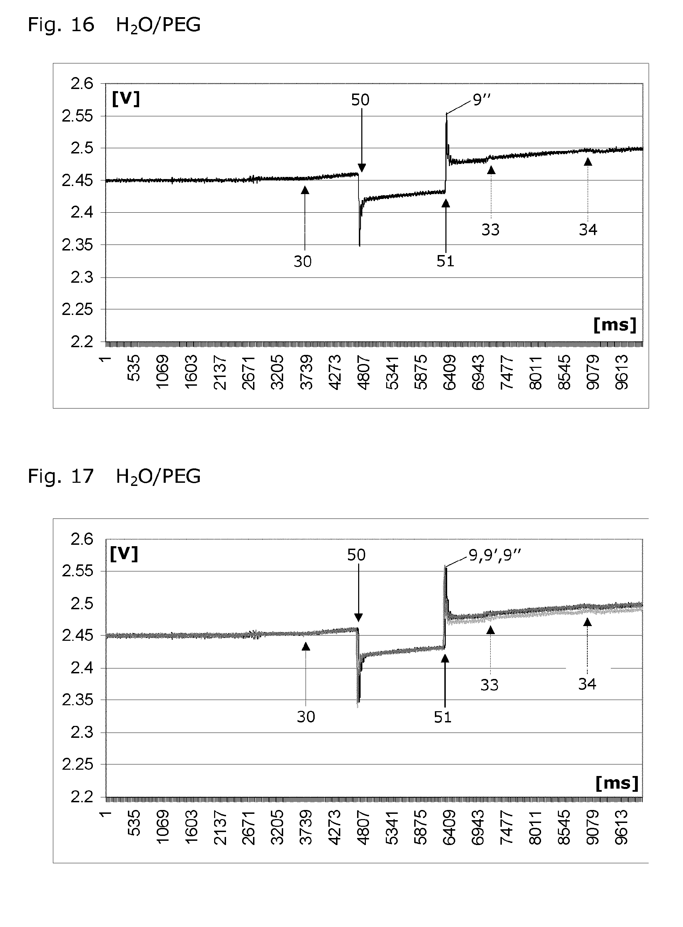

Figur 16 zeigt eine einzelne charakteristische Druckkurve 9" für eine Probenflüssigkeit mit einem Wasser/Polyethylenglykol-Gemisch (7% PEG in Wasser). Der Druck in der Pipette, d.h. im Fluidraum 2 und damit im Messraum 3 steigt ab dem Eintauchen 30 langsam und kontinuierlich an, was auf eine Kapillarwirkung der Pipettenspitze und damit in diese eindringendes Wasser/PEG-Gemisch zurückgeführt werden kann. Beim Aspirationsbeginn 50 fällt der Druck zuerst um 0.11 V und schwingt dann extrem asymmetrisch auf einen um ca. 0.037 V erniedrigten Druck ein. Am Aspirationsende 51 steigt der Druck zuerst um 0.13 V an und schwingt dann wiederum extrem asymmetrisch auf einen um ca. 0.037 V höheren Druck ein. Beim Beginn 33 des Zurückziehens der Pipettenspitze aus der Probenflüssigkeit steigt der Druck nur unwesentlich an und fällt beim Ende 34 des Zurückziehens der Pipettenspitze aus der Probenflüssigkeit um etwa den gleichen Betrag. Es fällt auf, dass der anfänglich bemerkte, kontinuierliche Druckanstieg sich mit gleicher Steigung zwischen den Endpunkten der beschriebenen Aktivitäten fortsetzt.

Figur 17 zeigt drei charakteristische Druckkurven 9,9',9" für die Probenflüssigkeit mit dem Wasser/PEG-Gemisch (7% PEG in Wasser). Die hohe Reproduzierbarkeit der Resultate ist offensichtlich.

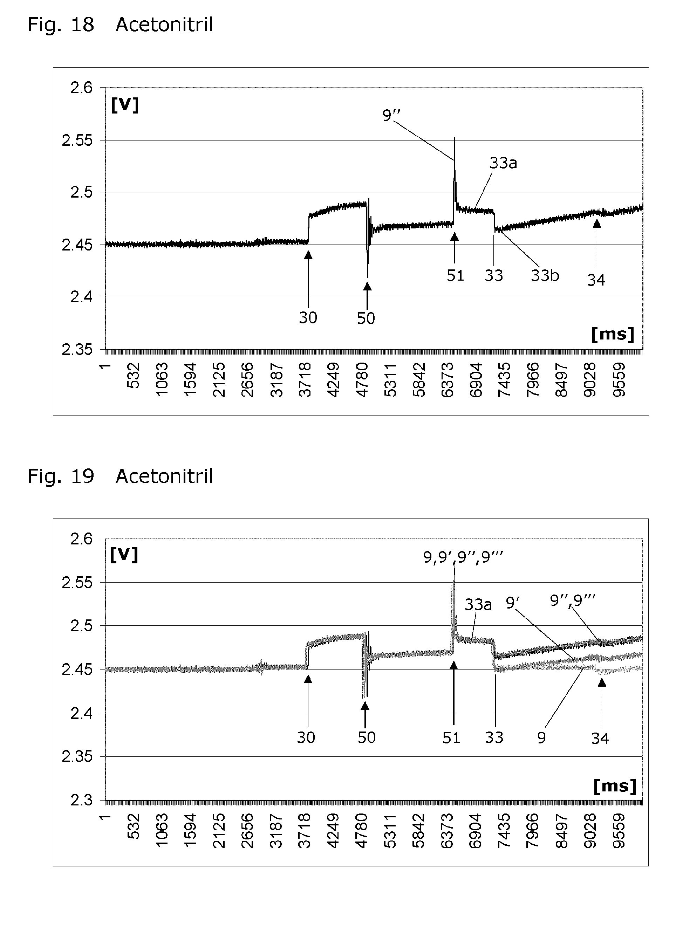

Figur 18 zeigt eine einzelne charakteristische Druckkurve 9" für die Probenflüssigkeit Acetonitril. Der Druck in der Pipette, d.h. im Fluidraum 2 und damit im Messraum 3 steigt ab dem Eintauchen 30 schnell um 0.027 V an und steigt langsamer werdend auf einen um ca. 0.04 V erhöhten Druck an. Beim Aspirationsbeginn 50 fällt der Druck zuerst um 0.09 V und schwingt dann beinahe symmetrisch auf einen nur um ca. 0.02 V tieferen Druck ein. Am Aspirationsende 51 steigt der Druck sehr steil um 0.08 V an und schwingt extrem einseitig auf einem nur um 0.035 V höheren Zwischenniveau 33a ein. Darauf fällt der Druck beim Beginn 33 des Zurückziehens der Pipettenspitze aus der Probenflüssigkeit um 0.017 V auf einen Wendepunkt 33b ab und steigt bis zum Ende 34 des Zurückziehens der Pipettenspitze aus der Probenflüssigkeit an, um dort um einen kleinen Betrag zu fallen.

Figur 19 zeigt drei charakteristische Druckkurven 9,9',9" für die Probenflüssigkeit Acetonitril. Die hohe Reproduzierbarkeit der Resultate ist trotz der komplexen Druckkurven offensichtlich.

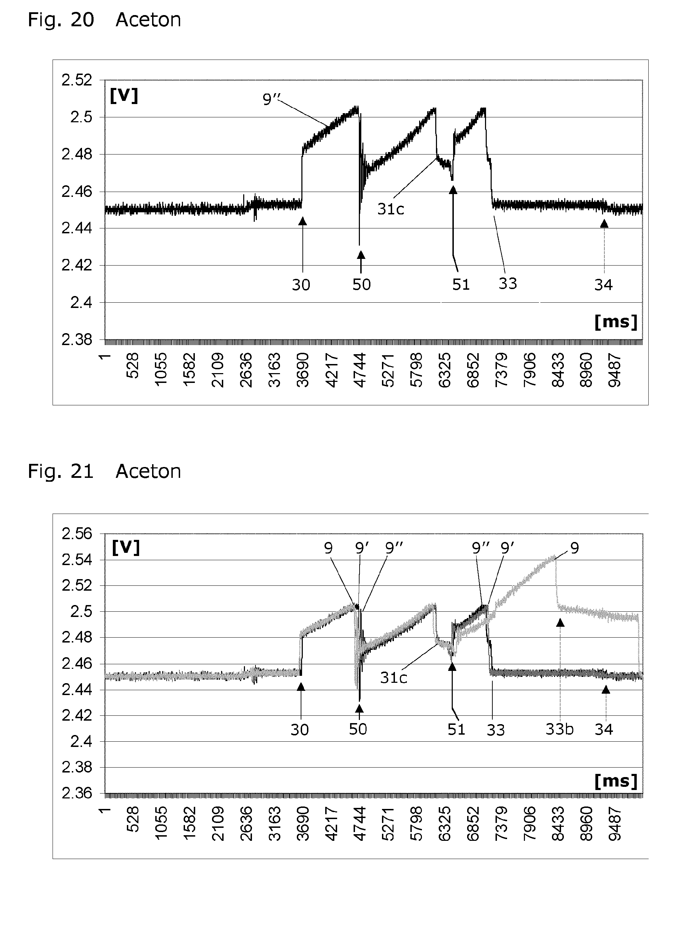

Figur 20 zeigt eine einzelne charakteristische Druckkurve 9" für die Probenflüssigkeit Aceton. Der Druck in der Pipette, d.h. im Fluidraum 2 und damit im Messraum 3 steigt ab dem Eintauchen 30 zuerst schnell um 0.03 V an und steigt dann konstant und steil auf einen um nochmals ca. 0.023 V erhöhten Druck an. Beim Aspirationsbeginn 50 fällt der Druck zuerst um 0.076 V und schwingt dann symmetrisch auf einen um ca. 0.04 V höheren Druck ein, um sofort wieder konstant und steil auf den Wert vor dem Aspirationsbeginn 50 anzusteigen. Der Anstieg des Druckes jeweils nach dem Eintauchen und der Aspiration ist auf den hohen Dampfdruck der Probenflüssigkeit zurückzuführen. In diesem Fall wird die beim Aspirate aufgenommene Probenflüssigkeit noch vor dem Aspirationsende 51 aus der Pipette gedrückt, gefolgt von einer Blase. Der Ausstoss dieser Blase 31c resultiert in einem Druckabfall um 0.026 V. Am Aspirationsende 51 steigt der Druck wiederum steil an, steigt unmittelbar weiter und erreicht wiederum den Wert von vor dem Aspirationsbeginn 50. Erneut wird durch den Dampfdruck eine Blase ausgestossen, was den Druck fallen lässt, während das Austauchen der Pipettenspitze beginnt, womit der Druck auf den ursprünglichen Anfangsdruck abfällt.

Figur 21 zeigt drei charakteristische Druckkurven 9,9',9" für die Probenflüssigkeit Aceton. Die hohe Reproduzierbarkeit der Resultate ist trotz der extrem komplexen Druckkurven zumindest bis zum Erreichen des Punktes 51 offensichtlich. Danach zeigt die Kurve 9 ein anderes Verhalten, das durch das Vorhandensein eines Flüssigkeits-Films am Auslass der Pipettenspitze nach dem Austauchen aus der Probe resultiert. Dieser Film verschliesst in diesem Falle die Pipettenspitze, sodass durch den hohen Dampfdruck der Probenflüssigkeit der Druck im Innenraum der Pipette weiter ansteigt. Bei Erreichen eines bestimmten Überdruckes platzt der Film und entlässt einen Teil des Überdruckes 33b, um sich darauf hin erneut zu bilden. Nun ist allerdings nahezu keine Probenflüssigkeit mehr in der Pipette vorhanden, wodurch der Druck nicht mehr weiter ansteigt. Mit dem Abwurf der Pipette fällt dann auch in diesem Fall der Druck wieder auf das Ausgangsniveau ab.

Die gezeigten Beispiele demonstrieren eindrücklich die Reproduzierbarkeit der Messresultate. Als Charakterisierungskriterien können alle beschriebenen Druckveränderungen dienen. Zudem spielt das Einschwingverhalten eine nicht zu unterschätzende Rolle. Wichtig ist auch das Festlegen von Toleranzgrenzen, die um die typischen Druckkurven gelegt werden. Diese Toleranzgrenzen können dank der hohen Reproduzierbarkeit der Druckkurven sehr eng gehalten werden. Fällt die Druckkurve einer unbekannten Flüssigkeit in einen vorher festgelegten Toleranzbereich ist eine Zuordnung dieser unbekannten Probenflüssigkeit in den meisten Fällen möglich.

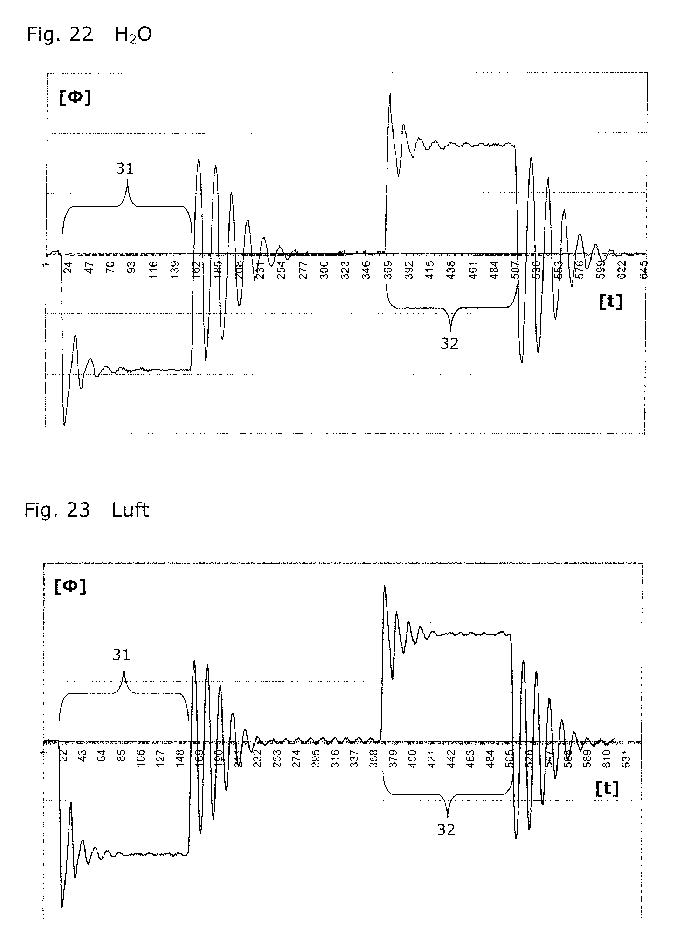

Figur 22 bzw. 23 zeigen Flussveränderungen in der Pipette eines zum Ausführen des erfindungsgemässen Verfahrens geeigneten Pipetiergeräts bzw. Pipetiersystems beim Aspirieren und Dispensieren einer Wasserprobe bzw. einer Luftprobe. Dargestellt sind jeweils Flusswerte [Φ] in Abhängigkeit der Zeit [t]. Die Flusswerte wurden normiert und sind nicht in absoluten Zahlen angegeben. Die Zeitwerte sind in Millisekunden angegeben.

Die Veränderungen eines ausgewählten, messbaren und physikalisch begründeten, virtuellen Parameters [Fluss] wurde jeweils als ein für diese Flüssigkeit (Wasser) bzw. dieses Fluid (Luft) typischer Datensatz erfasst. Gemessen wurde immer der Flusswert [Φ] in der Systemflüssigkeit 11 eines Pipetiergerätes, welches einen grundsätzlichen Aufbau entsprechend der Figur 5 aufweist. Dabei wurde der Flusswert bzw. die Richtung und die Geschwindigkeit der Systemfüssigkeit 11 am Flusssensor aufgezeichnet. Dieser Flusssensor war nahe der Pipettenspitze, aber in einem Bereich der Pipette angeordnet, der immer mit Systemflüssigkeit gefüllt war. Ein air-gap 39 trennte die Systemflüssigkeit 11 von der aufgenommenen oder abgegebenen Flüssigkeit (Wasser) oder von dem aufgenommenen oder abgegebenen Fluid (Luft).

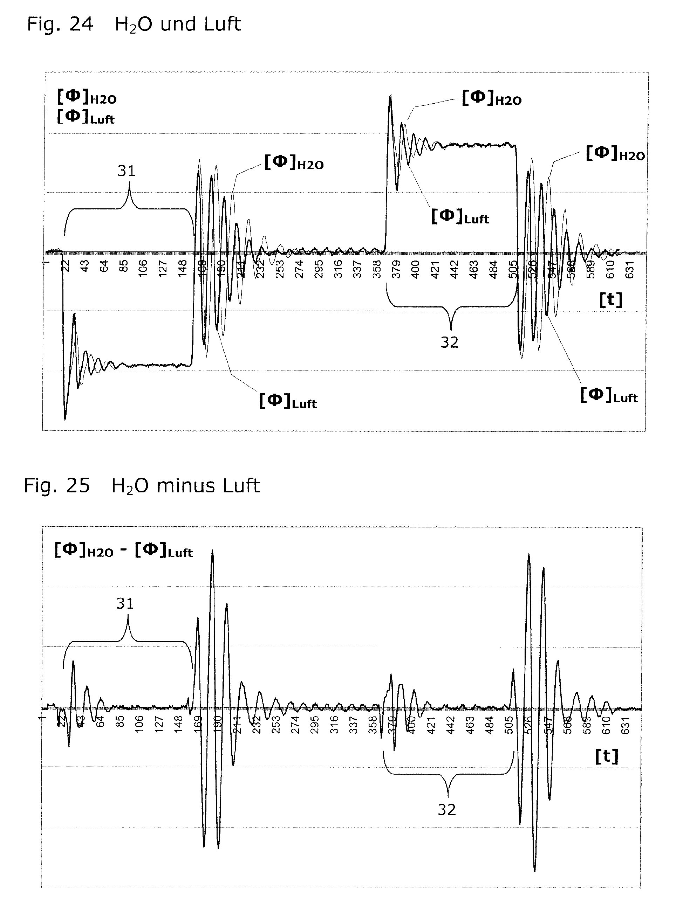

Die Kurven in den Figuren 22 und zeigen beide ein für Wasser (Systemflüssigkeit) typisches, symmetrisches Schwingungsverhalten des Flusswertes. Dieses Schwingungsverhalten erinnert an die Druckschwankungen, welche in einem System mit Wasserprobe gemessen wurden (vgl. Fig. 10), wogegen hier kein Drift-Verhalten der Messwerte festgestellt wurde. Die beiden gemessenen Flusskurven für Wasser und für Luft gleichen sich so sehr, dass erst eine graphische Gegenüberstellung (vgl. Fig. 24) oder eine mathematische Verarbeitung (vgl. Fig. 25) klare Unterschiede sichtbar macht.

Figur 24 zeigt eine Superposition der Flussveränderungs-Kurven von Fig. 22 "Wasser" und 23 "Luft". Die Flusskurve "Luft" (dicke Linie) schwingt schneller und geht auch schneller in einen Gleichgewichtszustand über als die Flusskurve "Wasser" (dünne Linie).

Figur 25 zeigt eine Subtraktionsdarstellung der Flussveränderungs-Kurven Fig. 22 "Wasser" minus 23 "Luft". Als mathematische Verarbeitung der beiden Vergleichskurven "Wasser" und "Luft" wurde hier die Subtraktion gewählt, so dass man eine eindrückliches Differenzbild der beiden Kurven erhält. Damit ist klar gezeigt, dass unterschiedliche Proben auch unterschiedliche Flusskurven bewirken. Es bleibt nun dem einzelnen Anwender überlassen, ob er die charakteristische Flusskurve einer Probe direkt auswerten und mit einer gespeicherten Flusskurve einer bekannten Probe, z.B. durch eine Superposition wie in Fig. 24, vergleichen will. Alternativ zu oder in Kombination mit einem direkten Vergleich, können nach Belieben auch mathematische Operationen, wie. z.B. in Fig. 25, für Vergleichszwecke zu Hilfe genommen werden.

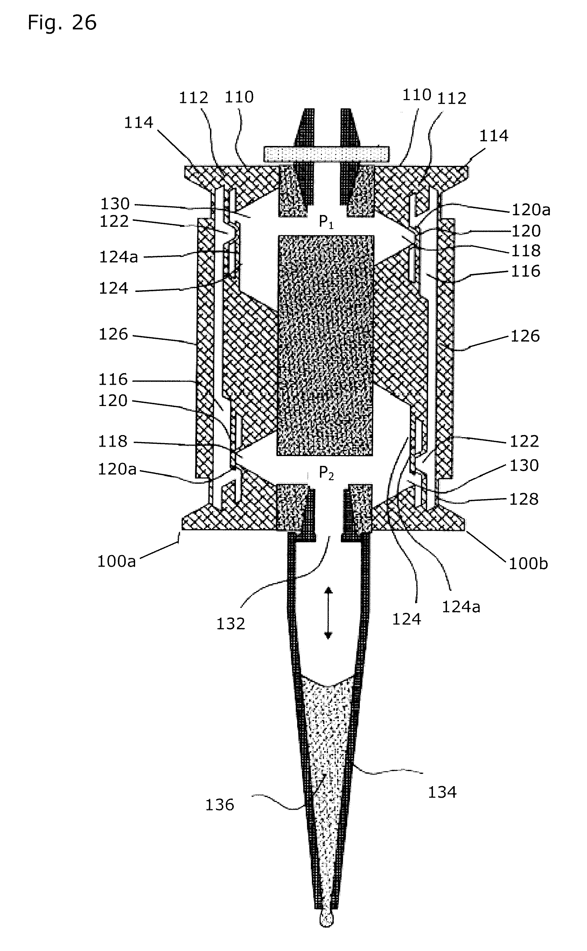

Figur 26 zeigt eine Schnittdarstellung durch eine Mikromembranpumpe zum Erzeugen eines Unterdrucks in der Pipettenspitze zum Aspirieren einer Flüssigkeitsprobe und zum Erzeugen eines Überdrucks in der Pipettenspitze zum Dispensieren einer Flüssigkeitsprobe, welche als Figur 1 aus DE 102 38 564 A1 bekannt ist. Diese aus dem Stand der Technik bekannte Pipettiereinrichtung weist zwei Mikropumpen mit passiven Klappventilen auf. Diese Pipettiereinrichtung weist eine erste und zweite Mikropumpe 110a uns 110b auf, deren Funktionsweise in DE 102 38 564 A1 im Detail beschrieben ist. Beide Mikropumpen umfassen je ein piezoelektrisches Betätigungselement 126, welches ale eine piezoelektrische Keramikschicht grossflächig auf einer dünn ausgebildeten Membran 128 angeordnet ist und zum Verkleinern oder Vergrössern der Pumpenkammer 116 dienen. Alle Bezugszeichen in Fig. 26 wurden von DE 102 38 564 A1 übernommen und sind dort beschrieben.

Die Stromaufnahme dieser piezoelektrischen Keramikschicht hängt vom hydrostatischen Druck ab, der die zu pipettierende Flüssigkeit in der Pipettenspitze erzeugt. Aber auch die auftretenden Kapillareffekte, die Oberflächenspannung und der Dampfdruck der zu pipettierenden Flüssigkeit wirken sich auf die Stromaufnahme der piezoelektrischen Keramikschicht beim Aufnehmen (Aspirieren) oder Abgeben (Dispensieren) einer Flüssigkeitsprobe aus. Das Messen und Aufzeichnen des Verlaufs dieser Stromaufnahme kann deshalb ebenfalls zum Charakterisieren einer Probenflüssigkeit herangezogen werden. Alternativ zur Verwendung dieser bekannten Mikropumpe könnte zu dem gleichen Zweck auch eine Mikropumpe mit aktiven Ventilen verwendet werden, wie diese in DE 102 38 564 A1 im Zusammenhang mit den Figuren 2 und 3 offenbart sind.

Die Pipettenspitze 134 kann eine Stahlspitze oder eine Kombination aus einem Spitzenadapter und einer auf diesen aufgesetzten Wegwerfpipettenspitze sein. Die Mikropumpe kann (wie in DE 102 38 564 A1 offenbart) zum Fördern von Gasen, wie z.B. Luft, aber auch zum Fördern einer Systemflüssigkeit verwendet werden; wobei diese Systemflüssigkeit vorzugsweise durch ein air-gap von der zu pipettierenden Probenflüssigkeit getrennt ist.

## Patentansprüche

1. Verfahren zum Auswählen von Pipettierparametern zum Aspirieren und Dispensieren einer Flüssigkeitsprobe (6) mit einem Pipettier-System, wobei das Pipettier-System umfasst:
(i) einen Fluidraum (2), in welchem eine im Wesentlichen zusammenhängende Fluidsäule (7) angeordnet ist;
(ii) einen Messraum (3) mit einem Druckfühler (4), wobei der Messraum (3) mit dem Fluidraum (2) in pneumatischer Verbindung steht;
(iii) eine mit dem Fluidraum (2) verbundene Pumpe (20) mit einem Kolben (21) zum Bewegen der Fluidsäule (7) im Fluidraum (2) und zum Erzeugen eines Unterdrucks oder Überdrucks im Fluidraum (2) zum Aspirieren oder Dispensieren von Flüssigkeitsproben (6);
(iii) eine mit dem Fluidraum (2) verbundene Pipettenspitze (12) zum Aufnehmen oder Abgeben von Flüssigkeitsproben (6); und
(iv) einen Rechner (8) zum Verarbeiten von durch den Druckfühler (4) aufgenommenen Messsignalen;
und wobei das Verfahren **dadurch gekennzeichnet ist, dass** es folgende Schritte umfasst:
(a) Beginn des Messens des Drucks im Fluidraum (2) als Druck im Messraum (3), Erfassen dieses Drucks im Messraum (3) mit dem Druckfühler (4) und Verarbeiten des Messsignale des Druckfühlers (4) mit dem Rechner (8);
(b) Eintauchen der Pipettenspitze (12) in eine Flüssigkeit (1) aus der eine Flüssigkeitsprobe (6) aufgenommen werden soll;
(c) Abgeben eines einseitigen Impulses auf die Fluidsäule (7) im Fluidraum (2) durch Bewegen des Kolbens (21) der Pumpe (20) des Pipettier-Systems beim Beginn des Aspirierens (50) der Flüssigkeitsprobe (6), wobei dieser einseitige Impuls die Fluidsäule (7) im Fluidraum (2) gegenüber der Flüssigkeit (1) in für die aufgenommene Flüssigkeitsprobe (6) charakteristische Schwingungen versetzt;
(d) Erfassen dieses charakteristischen Schwingungsverhaltens der Fluidsäule (7) mit dem Druckfühler (4) als Druckschwingungen im Messraum (3) und Verarbeiten der vom Druckfühler (4) erzeugten, den Druckschwingungen im Messraum (3) entsprechenden Messsignale mit dem Rechner (8);
(e) Erfassen des weiteren Verlaufs des Drucks im Fluidraum (2) während dem Aspirieren als Druckverlauf im Messraum (3) und Verarbeiten der vom Druckfühler (4) erzeugten, dem Druckverlauf im Messraum (3) entsprechenden Messsignale mit dem Rechner (8);
(f) Widergeben der mit dem Rechner (8) in den Schritten (a), (d) und (e) erfassten und verarbeiteten Messsignale als typische Druckkurve (9), die dem Druck im Fluidraum (2) nach dem Eintauchen der Pipettenspitze (12), dem durch die aspirierte Flüssigkeitsprobe (6) beeinflussten, charakteristischen Schwingungsverhalten der Fluidsäule (7) und dem weiteren Verlauf des Drucks im Fluidraum (2) während dem Aspirieren entspricht; und
(g) Vergleichen dieser im Schritt (f) wiedergegebenen, für eine aspirierte Flüssigkeitsprobe (6) typischen Druckkurve (9) mit bekannten, entsprechend erhaltenen und charakteristischen Druckkurven (9',9"), von bekannten Flüssigkeiten (1).

2. Verfahren nach Anspruch 1, **dadurch gekennzeichnet, dass** die typische Druckkurve (9) einen Verlauf aufweist, der im eingetauchten Zustand der Pipettenspitze (12) vor dem Aspirieren charakterisiert wird durch:
- ein Ansteigen, oder
- ein konstant Bleiben, oder
- eine sprungartige Erhöhung, oder
- eine sprungartige Erhöhung und Ansteigen des Drucks.

3. Verfahren nach Anspruch 1 oder 2, **dadurch gekennzeichnet, dass** die typische Druckkurve (9) einen Verlauf aufweist, der im eingetauchten Zustand der Pipettenspitze (12) nach dem Beginn des Aspirierens (50) der Flüssigkeitsprobe (6) charakterisiert wird durch:
- ein symmetrisches Einschwingen, oder
- ein asymmetrisches Einschwingen.

4. Verfahren nach einem der Ansprüche 1 bis 3, **dadurch gekennzeichnet, dass** die typische Druckkurve (9) einen Verlauf aufweist, der im eingetauchten Zustand der Pipettenspitze (12) während dem Aspirieren charakterisiert wird durch:
- ein Ansteigen des Drucks, oder
- ein konstant Bleiben des Drucks, oder
- ein Fallen des Drucks.

5. Verfahren nach einem der Ansprüche 1 bis 4, **dadurch gekennzeichnet, dass** der Messraum (3) mit einem Gas gefüllt ist.

6. Verfahren nach Anspruch 1 bis 5, **dadurch gekennzeichnet, dass** die Fluidsäule (7) ein Gas (10) und Flüssigkeiten umfasst und durch ein plötzliches Bewegen gegenüber der Flüssigkeit (1) in Schwingungen versetzt wird.

7. Verfahren nach Anspruch 1 bis 5, **dadurch gekennzeichnet, dass** die Fluidsäule (7) aus einem Gas (10) gebildet und durch ein plötzliches Bewegen gegenüber der Flüssigkeit (1) in Schwingungen versetzt wird.

8. Verfahren nach Anspruch 1 bis 5, **dadurch gekennzeichnet, dass** die Fluidsäule (7) aus einer Systemflüssigkeit (11) gebildet wird, welche durch ein plötzliches Bewegen gegenüber der Flüssigkeitsprobe (6) in Schwingungen versetzt wird.

9. Verfahren nach Anspruch 6, **dadurch gekennzeichnet, dass** die Systemflüssigkeit (11) und die Flüssigkeitsprobe (6) durch ein air-gap (39) voneinander getrennt sind.

10. Verfahren nach einem der Ansprüche 1 bis 9, **dadurch gekennzeichnet, dass** die erfasste typische Druckkurve (9) auf einem Bildschirm (14) dargestellt oder ausgedruckt und optisch mit bekannten, auf dem Bildschirm (14) dargestellten oder ausgedruckten Druckkurven (9',9") verglichen wird.

11. Verfahren nach einem der Ansprüche 1 bis 9, **dadurch gekennzeichnet, dass** die erfasste typische Druckkurve (9) an Hand eines Algorithmus ausgewertet und mathematisch mit bekannten und entsprechend ausgewerteten Druckkurven (9',9") verglichen wird.

12. Verfahren nach einem der Ansprüche 10 oder 11, **dadurch gekennzeichnet, dass** die erfasste typische Druckkurve (9) automatisch mit bekannten und entsprechend ausgewerteten Druckkurven (9',9") verglichen wird, und - falls der Verlauf der Druckschwingungen der typischen Druckkurve (9) innerhalb von festgelegten Toleranzgrenzen liegt - entsprechende Pipettierparameter von bekannten Flüssigkeiten zum Dispensieren der aufgenommenen Flüssigkeitsprobe (6) ausgewählt werden.

13. Verfahren nach einem der Ansprüche 10 oder 11, **dadurch gekennzeichnet, dass** die erfasste typische Druckkurve (9) automatisch mit bekannten und entsprechend ausgewerteten Druckkurven (9',9") verglichen wird, und - falls der Verlauf der Druckschwingungen der typischen Druckkurve (9) ausserhalb von festgelegten Toleranzgrenzen liegt - der beim Aspirieren aufgenommenen Flüssigkeitsprobe (6) neue Pipettierparameter zugeordnet werden.

14. Verfahren nach einem der Ansprüche 12 oder 13, **dadurch gekennzeichnet, dass** die Toleranzgrenzen vor oder nach dem Erfassen der Druckschwingungen und dem Erstellen der typischen Druckkurve (9) festgelegt werden.

15. Verfahren nach einem der Ansprüche 1 bis 14, **dadurch gekennzeichnet, dass** die erfasste typische Druckkurve (9) anhand des Verlaufs von oberen und unteren Hüllkurven (37,38) charakterisiert wird.

## Claims

1. Method of selecting pipetting parameters for aspiration and dispense of a liquid sample (6) using a pipetting device comprising:
(i) a fluid chamber (2), in which a substantially continuous fluid column (7) is disposed;
(ii) a measuring chamber (3) with a pressure transducer (4), whereby the measuring chamber (3) is connected pneumatically to the fluid chamber (2);
(iii) a pump (20) connected to the fluid chamber (2), the pump (20) comprising a piston (21) for moving the fluid column (7) disposed in the fluid chamber (2) and for generating negative pressure or positive pressure in the fluid chamber (2) for aspirating or dispensing liquid samples (6);
(iv) a pipette tip (12) connected to the fluid chamber (2) for drawing in or dispensing liquid samples (6); and
(v) a computer (8) for processing measuring signals sensed by the pressure transducer (4);
and whereby the method is **characterized by** comprising the following steps:
(a) starting to measure the pressure in the fluid chamber (2) as pressure in the measuring chamber (3), monitoring said pressure in the measuring chamber (3) with the pressure transducer (4), and processing the measuring signals of the pressure transducer (4) by the computer (8);
(b) immersing the pipette tip (12) into a liquid (1) from which a liquid sample (6) should be drawn in;
(c) releasing an unidirectional impulse to the fluid column (7) disposed in the fluid chamber (2) by moving the piston (21) of the pump (20) of the pipetting device at the beginning of aspiration (50) of the liquid sample (6), wherein the unidirectional impulse is setting the fluid column (7) disposed in the fluid chamber (2) into oscillations in relation to the liquid (1), the oscillations being characteristic for the drawn-in liquid sample (6);
(d) monitoring the characteristic oscillation behavior of the fluid column (7) as pressure oscillations in the measuring chamber (3) using the pressure transducer (4), and processing by the computer (8) the measuring signals produced by the pressure transducer (4) and corresponding to the pressure oscillations in the measuring chamber (3);
(e) monitoring by the computer (8) the further progression of the pressure in the fluid chamber (2) during aspiration as pressure progression in the measuring chamber (3) and processing the measuring signals that are produced by the pressure transducer (4) and that are corresponding to the pressure progression in the measuring chamber (3);
(f) reproducing the measuring signals, monitored and processed in the steps (a), (d), and (e) by the computer (8), as typical pressure curve (9) that reflects the pressure in the fluid chamber (2) after immersion of the pipette tip (12), that reflects the characteristic oscillation behavior of the fluid column (7) influenced by the aspirated liquid sample (6), and that reflects the further progression of the pressure in the fluid chamber (2) during aspiration; and
(g) comparing the typical pressure curve (9) for aspired liquid samples reproduced in step (f) to known, correspondently gained and characteristic pressure curves (9',9") of known liquids (1).

2. The method according to claim 1, **characterized in that** the typical pressure curve (9) shows a progression, which is, within the state of an immersed pipette tip (12) before aspiration, distinguished by:
• a rising, or
• a remaining constant, or
• a stepwise increase, or
• a stepwise increase and a rising of the pressure.

3. The method according to claim 1 or 2, **characterized in that** the typical pressure curve (9) shows a progression, which is, within the state of an immersed pipette tip (12) after beginning aspiration (50) of the liquid sample (6), distinguished by:
• a symmetric transient oscillation, or
• an asymmetric transient oscillation.

4. The method according to one of the claims 1 to 3, **characterized in that** the typical pressure curve (9) shows a progression, which is, within the state of an immersed pipette tip (12) during aspiration, distinguished by:
• a rising of the pressure, or
• a remaining constant of the pressure, or
• a decreasing of the pressure.

5. The method according to one of the claims 1 to 4, **characterized in that** the measuring chamber (3) is filled with gas.

6. The method according to the claims 1 to 5, **characterized in that** the fluid column (7) comprises a gas (10) and liquids and is set into oscillation by a sudden movement in relation to the liquid (1).

7. The method according to the claims 1 to 5, **characterized in that** the fluid column (7) is formed by a gas (10) and set into oscillation by a sudden movement in relation to the liquid (1).

8. The method according to the claims 1 to 5, **characterized in that** the fluid column (7) is formed by a system liquid (11), which is set into oscillation by a sudden movement in relation to the liquid sample (6).

9. The method according to claim 8, **characterized in that** the system liquid (11) and the liquid sample (6) are separated from each other by an air-gap (39).

10. The method according to one of the claims 1 to 9, **characterized in that** the monitored typical pressure curve (9) is shown on a screen (14) or printed and compared visually to known pressure curves (9',9"), printed or shown on the screen (14).

11. The method according to one of the claims 1 to 9, **characterized in that** the monitored typical pressure curve (9) is processed according to an algorithm and compared mathematically to known and correspondently processed pressure curves (9',9").

12. The method according to claim 10 or 11, **characterized in that** the monitored typical pressure curve (9) is compared automatically to known and correspondently processed pressure curves (9',9") and - if the progression of the pressure oscillation of the typical pressure curve (9) lies within established tolerance limits - pipetting parameters of known liquids are chosen for dispensing the drawn-in liquid samples (6).

13. The method according to claim 10 or 11, **characterized in that** the monitored typical pressure curve (9) is compared automatically to known and correspondently processed pressure curves (9',9") and - if the progression of the pressure oscillation of the typical pressure curve (9) exceeds established tolerance limits - new pipetting parameters are assigned to the drawn-in liquid sample (6).

14. The method according to claim 12 or 13, **characterized in that** the tolerance limits are established before or after monitoring the pressure oscillation and reproducing the typical pressure curve (9).

15. The method according to one of the claims 1 to 14, **characterized in that** the monitored typical pressure curve (9) is described according to the progression of upper and lower envelope curves (37,38).

## Revendications

1. Procédé pour choisir des paramètres de pipetage pour aspirer et distribuer un échantillon liquide (6) avec un système de pipetage, le système de pipetage comprenant :
(i) un espace fluidique (2) dans lequel est agencée une colonne de fluide (7) essentiellement continue ;
(ii) une chambre de mesure (3) comprenant un capteur de pression (4), la chambre de mesure (3) étant en liaison pneumatique avec l'espace fluidique (2) ;
(iii) une pompe (20) raccordée à l'espace fluidique (2), avec un piston (21) pour déplacer la colonne de fluide (7) dans l'espace fluidique (2) et pour créer une dépression ou une surpression dans l'espace fluidique (2) pour aspirer ou distribuer des échantillons liquides (6) ;
(iv) une pointe de pipette (12) reliée à l'espace fluidique (2) pour absorber ou délivrer des échantillons liquides (6) ; et
(v) un ordinateur (8) pour traiter des signaux de mesure enregistrés par le capteur de pression (4),
le procédé étant **caractérisé en ce qu'**il comprend des étapes suivantes :
(a) débuter la mesure de la pression dans l'espace fluidique (2) en tant que pression dans la chambre de mesure (3), enregistrer cette pression dans la chambre de mesure (3) avec le capteur de pression (4) et traiter les signaux de mesure du capteur de pression (4) avec l'ordinateur (8) ;
(b) immerger la pointe de pipette (12) dans un liquide (1) à partir duquel un échantillon liquide (6) doit être extrait ;
(c) émettre une impulsion unilatérale sur la colonne de fluide (7) dans l'espace fluidique (2) en déplaçant le piston (21) de la pompe (20) du système de pipetage au début de l'aspiration (50) de l'échantillon liquide (6), cette impulsion unilatérale faisant osciller de manière caractéristique pour l'échantillon liquide prélevé (6) la colonne de fluide (7) dans l'espace fluidique (2) par rapport au liquide (1) ;
(d) enregistrer ce comportement oscillatoire caractéristique de la colonne de fluide (7) avec le capteur de pression (4) en tant qu'oscillations de pression dans la chambre de mesure (3) et traiter les signaux de mesure produits par le capteur de pression (4) et correspondant aux oscillations de pression dans la chambre de mesure (3) avec l'ordinateur (8) ;
(e) enregistrer l'évolution de la pression dans l'espace fluidique (2) pendant l'aspiration sous la forme de l'évolution de pression dans la chambre de mesure (3) et traiter les signaux de mesure produits par le capteur de pression (4) et correspondant à l'évolution de pression dans la chambre de mesure (3) avec l'ordinateur (8) ;
(f) reproduire les signaux de mesure enregistrés et traités avec l'ordinateur (8) dans les étapes (a), (d) et (e) en tant que courbe de pression typique (9), laquelle correspondent à la pression dans l'espace fluidique (2) après l'immersion de la pointe de pipette (12), au comportement oscillatoire caractéristique de la colonne de fluide (7) influencé par l'échantillon liquide aspiré (6) et à l'évolution de la pression dans l'espace fluidique (2) pendant l'aspiration ; et
(g) comparer cette courbe de pression typique (9) d'un échantillon liquide aspiré (6) reproduite à l'étape (f) avec des courbes de pression (9',9") caractéristiques, connues et obtenues de façon appropriée de liquides connus (1).

2. Procédé selon la revendication 1, **caractérisé en ce que** la courbe de pression typique (9) présente une évolution qui, à l'état immergé de la pointe de pipette (12) avant l'aspiration, est **caractérisée par** :
- une augmentation, ou
- une constance, ou
- une augmentation brusque, ou
- une augmentation brusque et une augmentation de la pression.

3. Procédé selon la revendication 1 ou 2, **caractérisé en ce que** la courbe de pression typique (9) présente une évolution qui, à l'état immergé de la pointe de pipette (12) après le début de l'aspiration (50) de l'échantillon liquide (6), est **caractérisée par** :
- une oscillation symétrique, ou
- une oscillation asymétrique.

4. Procédé selon l'une des revendications 1 à 3, **caractérisé en ce que** la courbe de pression typique (9) présente une évolution qui, à l'état immergé de la pointe de pipette (12) pendant l'aspiration, est **caractérisée par** :
- une augmentation de la pression, ou
- une constance de la pression, ou
- une chute de la pression.

5. Procédé selon l'une des revendications 1 à 4, **caractérisé en ce que** la chambre de mesure (3) est remplie d'un gaz.

6. Procédé selon les revendications 1 à 5, **caractérisé en ce que** la colonne de fluide (7) comprend un gaz (10) et des liquides et est mise en oscillation par un mouvement soudain vis-à-vis du liquide (1).

7. Procédé selon les revendications 1 à 5, **caractérisé en ce que** la colonne de fluide (7) est formée d'un gaz (10) est et mise en oscillation par un mouvement soudain vis-à-vis du liquide (1).

8. Procédé selon les revendications 1 à 5, **caractérisé en ce que** la colonne de fluide (7) est formée d'un liquide de système (11) qui est mis en oscillation par un mouvement soudain vis-à-vis de l'échantillon liquide (6).

9. Procédé selon la revendication 8, **caractérisé en ce que** le liquide de système (11) et l'échantillon liquide (6) sont séparés l'un de l'autre par un air gap.

10. Procédé selon l'une des revendications 1 à 9, **caractérisé en ce que** la courbe de pression typique (9) enregistrée est affichée sur un écran (14) ou imprimée et comparée visuellement avec des courbes de pression (9',9") connues affichées sur l'écran (14) ou imprimées (9',9").

11. Procédé selon l'une des revendications 1 à 9, **caractérisé en ce que** la courbe de pression typique (9) enregistrée est interprétée à l'aide d'un algorithme et est comparée mathématiquement à des courbes de pression (9',9") connues et interprétées de façon appropriée.

12. Procédé selon l'une des revendications 10 ou 11, **caractérisé en ce que** la courbe de pression typique (9) enregistrée est comparée automatiquement à des courbes de pression (9',9") connues et interprétées de façon appropriée et - si l'évolution des oscillations de pression de la courbe de pression typique (9) se situe dans des limites de tolérance déterminées - on choisit des paramètres de pipetage correspondants des liquides connus pour distribuer l'échantillon liquide (6) prélevé.

13. Procédé selon l'une des revendications 10 ou 11, **caractérisé en ce que** la courbe de pression typique (9) enregistrée est comparée automatiquement avec des courbes de pression (9',9") connues et interprétées de façon appropriée, et - si l'évolution des oscillations de pression de la courbe de pression typique (9) est en-dehors des limites de tolérance déterminées - on attribue au échantillon liquide (6) prélevé lors de l'aspiration de nouveaux paramètres de pipetage.

14. Procédé selon l'une des revendications 12 ou 13, **caractérisé en ce que** les limites de tolérance sont déterminées avant ou après l'enregistrement des oscillations de pression et avant ou après l'établissement de la courbe de pression typique (9).

15. Procédé selon l'une des revendications 1 à 14, **caractérisé en ce que** la courbe de pression typique (9) enregistrée est caractérisée à l'aide de l'évolution de courbes enveloppes supérieures et inférieures (37,38).
